# FASCICULE DE BREVET EUROPEEN

(11) **EP 0 818 335 B1**
(45) Date de publication et mention de la délivrance du brevet: **27.03.2002**
(21) Numéro de dépôt: 97401548.9
(22) Date de dépôt: 01.07.1997
(51) Int. Cl.: B60H 1/00

(54) **Procédé de régulation automatique de la climatisation d'une enceinte et dispositif pour la mise en oeuvre de ce procédé**
Verfahren zur automatischen Raumklimaregelung und Vorrichtung zur Durchführung des Verfahrens
Method for the automatic control of the air conditioning of a room and device for carrying out this method

(30) Priorité: 10.07.1996 FR 9608625
(43) Date de publication de la demande: 14.01.1998
(73) Titulaire: AUTOMOBILES PEUGEOT, 75116 Paris (FR); AUTOMOBILES CITROEN, 92200 Neuilly-sur-Seine (FR)
(72) Inventeur: Riat, Jean-Christophe, 92300 Levallois-Perret (FR)
(74) Mandataire: Armengaud Ainé, Alain

(56) Documents cités:
- EP-A- 0 155 913
- DE-A- 4 119 475
- FR-A- 2 523 904

## Description

La présente invention est relative à un dispositif de climatisation d'une enceinte fermée et plus particulièrement, quoique non exclusivement, de l'habitacle d'un véhicule automobile, permettant notamment d'assurer une régulation automatique de l'ambiance qui règne à l'intérieur de celui-ci, pour le conducteur comme pour les passagers, en fonction d'une simple demande d'accroissement ou de diminution du chauffage ou du refroidissement de cette ambiance.

On sait que les véhicules automobiles actuels, notamment ceux que l'on a coutume de désigner sous le terme de "haut de gamme" des divers constructeurs, sont équipés de systèmes de climatisation d'air, dont le fonctionnement entièrement automatique est assuré à partir d'indications fournies par des capteurs qui relèvent en particulier la température extérieure à l'habitacle et la température intérieure, les paramètres de mesure ainsi acquis étant transmis à un ensemble électronique qui pilote de façon asservie différents mécanismes qui jouent sur la température et l'ambiance dans l'habitacle, tels que des ventilateurs, motoréducteurs pour les volets commandant le mixage et la répartition de l'air externe et interne, pulseurs, moyens de production et de soutirage de frigories à partir d'une centrale de réfrigération ou de prélèvement de calories sur le circuit de refroidissement du moteur etc...

Ces systèmes de commande et de régulation sont généralement complexes, la demande consistant le plus souvent, pour l'utilisateur, à afficher au tableau de bord du véhicule une température de consigne correspondant à celle souhaitée dans l'habitacle, le dispositif de climatisation fournissant automatiquement de l'air à la température fixée, voire à une température voisine pour tenir compte de certains facteurs annexes qui interviennent dans le confort thermique recherché.

Des réalisations de ce genre sont notamment illustrées dans les brevets DE-A-41 19 475, FR-A-2 523 904 préambule de la revendication 1 et EP-0 155 913.

Or, ces réalisations classiques présentent également d'autres inconvénients : en premier lieu, la température de consigne affichée se fait de manière absolue et, en fait, arbitraire, l'usager n'ayant aucune référence immédiatement disponible comme la température réelle dans l'habitacle à l'instant correspondant. De plus, selon les documents antérieurs mentionnés ci-dessus, l'utilisateur exprime uniquement un souhait de température, en agissant sur un paramètre déterminé pour le faire augmenter ou diminuer, par exemple dans le brevet allemand DE-A-41 19 475, sur la vitesse du pulseur d'air, dans les autres documents, en complément, sur la position du volet de répartition d'air dans l'habitacle, chacun des moyens de commande du paramètre choisi restant dans l'état où il aura été amené, en agissant sur la touche d'actionnement correspondante.

Notamment dans les systèmes de commande selon l'art antérieur, on n'agit pas sur les autres paramètres qui interviennent dans le confort thermique, tels par exemple que l'humidité ambiante ou la vitesse de l'air dans l'habitacle modifiée par le déplacement du véhicule. Enfin, comme déjà rappelé ci-dessus, la température de consigne prise en compte par le système n'est pas toujours exactement celle spécifiée par l'usager, la commande électronique de l'appareil nécessitant un traitement préalable des données pour corriger la valeur affichée, ce qui conduit à un ensemble coûteux et relativement complexe.

La présente invention est relative à un dispositif de climatisation automatique, qui est à la fois plus simple et dont les effets sont plus immédiatement appréciables par l'utilisateur, lequel, à la différence des systèmes connus où il affiche une température donnée à atteindre, joue sur une commande permettant la fourniture d'une quantité donnée de "réchauffement" ou de "refroidissement", propre à lui assurer le confort thermique souhaité.

L'invention vise donc à améliorer de façon efficace, et au moyen d'un ensemble moins sophistiqué, donc moins coûteux, le confort des personnes se trouvant dans l'habitacle du véhicule, consécutivement à une demande qui est en fait ici plus qualitative que quantitative, en faisant sous cet angle la meilleure synthèse de tous les paramètres qui interviennent dans la création de l'ambiance thermique recherchée, en prenant mieux en compte les critères nécessairement subjectifs liés aux sensations ressenties par ces personnes.

A cet effet, le dispositif considéré, pour la régulation automatique de la climatisation de l'air ambiant dans une enceinte fermée, notamment dans l'habitacle d'un véhicule automobile, par action de l'usager sur une commande traduisant une demande variable mais non chiffrée d'accroissement ou de diminution d'au moins un paramètre de climatisation pour atteindre un niveau de consigne à partir de la situation constatée, afin de faire évoluer le confort thermique ressenti jusqu'à satisfaire ledit usager, ce dispositif comportant un ensemble de contrôle du ou des paramètres de climatisation, et un calculateur agissant sur des moyens pour fournir à l'habitacle des calories ou des frigories selon le sens de la variation demandée, cet ensemble étant relié à un panneau de commande comportant des moyens de visualisation comprenant une pluralité de témoins lumineux voisins et au moins une touche d'actionnement dont la manoeuvre provoque, selon le cas, l'augmentation ou la diminution desdits paramètres dans une mesure qui correspond à l'affichage d'une fraction ou de la totalité desdits témoins, se caractérise en ce qu'il comporte de plus un moyen de comparaison permanente entre le paramètre de climatisation affiché par les témoins lumineux allumés du panneau de commande et le paramètre mesuré, propre à éteindre progressivement ces témoins, au fur et à mesure que l'écart relevé entre ces paramètres diminue.

Dans un mode de réalisation préféré, les témoins lumineux du panneau de commande sont constitués par au moins une rangée de diodes électroluminescentes, dont le nombre allumé par la manoeuvre de la touche d'actionnement indique l'importance et le sens de la variation demandée.

Avantageusement, le panneau de commande comporte un témoin additionnel, s'allumant lorsque l'écart relevé est nul, l'état de confort souhaité étant atteint.

Selon une variante de réalisation, l'ensemble de contrôle du ou des paramètres de climatisation comporte au moins deux sections distinctes, comprenant chacune une touche d'actionnement et une pluralité de témoins lumineux voisins, ces sections étant dévolues à une commande desdits paramètres, respectivement dans le sens d'une augmentation de la température ou d'une diminution de celle-ci.

Selon encore une autre variante, l'ensemble de contrôle comporte quatre sections distinctes, associées à un circuit de répartition de l'air réchauffé ou réfrigéré dans l'habitacle, respectivement dans une première zone au droit de la partie supérieure du corps de l'usager conducteur et de ses passagers, et dans une deuxième zone, au niveau des jambes de ceux-ci.

Le cas échéant, le circuit de répartition de l'air dans l'habitacle est prévu pour distribuer celui-ci respectivement vers l'avant ou vers l'arrière de l'habitacle, le cas échéant du côté du conducteur et du côté opposé.

Selon une autre caractéristique avantageuse du dispositif considéré, il comporte une commande prioritaire pour délivrer une fraction variable de l'air dans l'habitacle par des ouïes proches du pare-brise, pour assurer le dégivrage ou désembuage de celui-ci.

Selon encore une autre caractéristique, les moyens pour fournir à l'habitacle des calories ou des frigories selon le sens de la variation demandée, sont sous le contrôle du calculateur, qui assure simultanément la gestion des témoins lumineux.

D'autres caractéristiques d'un dispositif de régulation automatique de la climatisation d'une enceinte, établi conformément à l'invention, apparaîtront encore à travers la description qui suit d'un exemple de réalisation, donné à titre indicatif et non limitatif, en référence aux dessins annexés sur lesquels :
- La Figure 1 est une vue schématique du panneau de commande du dispositif considéré, selon un mode de réalisation préféré de l'invention.
- La Figure 2 illustre comment le panneau de commande de la Figure 1 s'intègre dans l'ensemble de climatisation d'un véhicule.

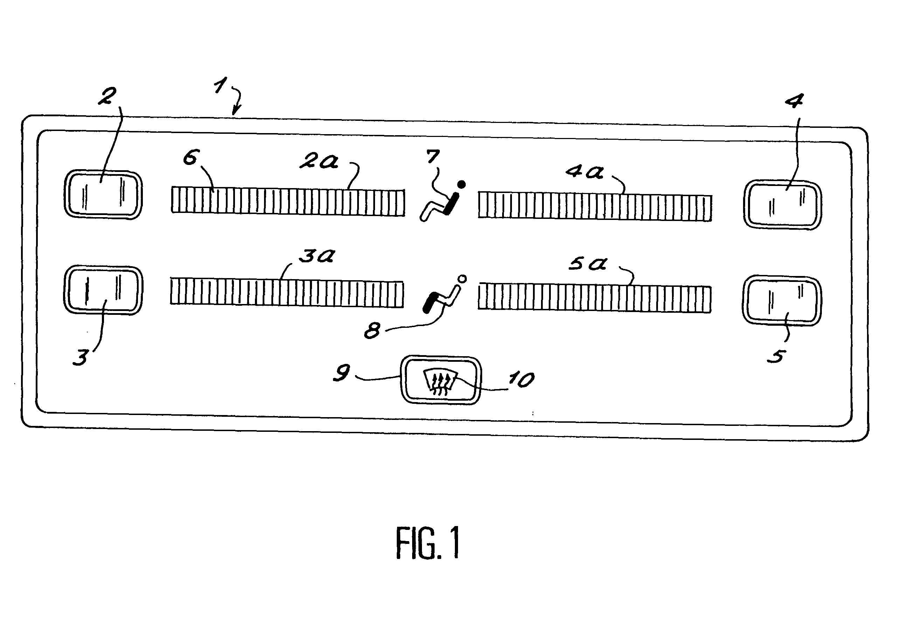

Sur la Figure 1, la référence 1 désigne un panneau de commande prévu pour être disposé sur le tableau ou planche de bord à l'intérieur de l'habitacle d'un véhicule automobile (non représenté).

Ce panneau 1 comporte, dans le mode de réalisation illustré sur la figure, quatre touches d'actionnement, respectivement 2 et 3 du côté gauche du panneau sur le dessin, 4 et 5 du côté droit, les touches 2 et 4 d'une part, 3 et 5 d'autre part étant respectivement en regard, selon deux lignes horizontales superposées.

Bien entendu, la disposition des touches d'actionnement 2 à 5 pourrait être différente, selon toute répartition jugée préférable par le constructeur, ces touches pouvant être elles-mêmes d'un type quelconque, à actionnement par pressions successives ou par enfoncement continu, jusqu'à relâchement de l'effort exercé par le doigt de l'usager, le retour en position initiale et la mise hors service de la touche considérée pouvant être réalisés automatiquement par un ressort de rappel (non représenté) ou encore par nouvel enfoncement de la touche, laquelle dans ce cas occupe l'une ou l'autre de deux positions distinctes, marche ou arrêt respectivement. On pourrait encore utiliser des touches tactiles.

A chacune des touches 2 à 5 précédentes est associée une rampe de visualisation, ces rampes étant désignées sur le dessin par les mêmes références que la touche correspondante, mais affectées de l'indice a.

Chaque rampe 2a à 5a est formée par une pluralité de témoins lumineux, constitués par des diodes électroluminescentes 6, voisines et disposées selon une rangée continue, l'actionnement de la touche associée provoquant l'éclairement d'une fraction ou de la totalité de ces diodes dans chaque rampe, le nombre de diodes éclairées, en partant à chaque fois d'une extrémité vers l'autre de la rangée, représentant la durée de mise en action de la touche et, comme précisé plus loin, l'accroissement souhaité d'un paramètre de climatisation déterminé, en l'espèce la température de l'habitacle, voire toute autre donnée ayant un effet sur le confort thermique à l'intérieur de cet habitacle.

Avec un tel panneau de commande, l'usager peut ainsi exprimer une demande de rafraîchissement de l'atmosphère ambiante à l'intérieur de l'habitacle, notamment par les touches de commande 2 et 3, ou inversement une demande de chauffage de cette même atmosphère par les touches 4 et 5, le panneau 1 étant conçu de telle sorte que les touches 2 et 4 agissent plus directement sur le circuit qui fournit l'air de climatisation à une première zone de l'habitacle en regard de la partie supérieure du corps des personnes qui se trouvent à l'intérieur de celui-ci, conducteur et passagers, tandis que les touches 3 et 5 sont prévues pour délivrer l'air au niveau d'une seconde zone, au droit des jambes de ces utilisateurs.

Des voyants ou témoins additionnels 7 et 8 sont avantageusement prévus entre les rampes 2a et 4a d'une part, 3a et 5a d'autre part, pour montrer quelle est celle des deux zones où le système est mis en oeuvre, à la demande de l'utilisateur.

Bien entendu, on pourrait, au lieu de voyants ou témoins, utiliser de simples symboles conventionnels pour indiquer la zone concernée.

Une touche complémentaire 9 peut également être prévue sur le panneau 1, en dehors des rampes 2a à 5a, cette touche permettant, en cas de nécessité, de forcer le dispositif à passer en mode de dégivrage/désembuage, auquel cas de l'air chaud est délivré par des ouïes du tableau de bord contre le pare-brise (non représenté) du véhicule, la touche 9 comportant à cet effet le symbole conventionnel 10, rappelant cette fonction.

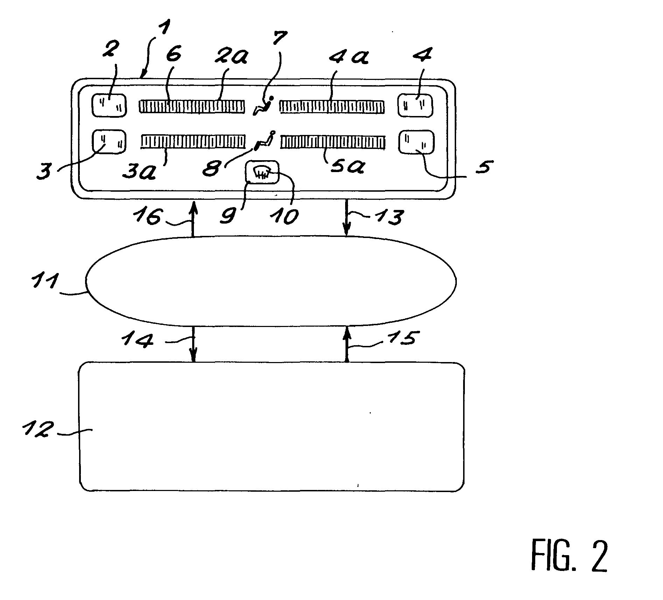

La Figure 2 illustre schématiquement la manière dont le panneau de commande 1 avec ses touches d'actionnement 2 à 5 et ses rangées de témoins lumineux 2a à 5a est raccordé à un ensemble de contrôle comprenant un calculateur électronique 11, agissant à son tour sur des moyens 12 qui réalisent, en fonction des demandes affichées, la fourniture d'air climatisé dans l'habitacle du véhicule, ces moyens comportant l'ensemble des ventilateurs, pulseurs, motoréducteurs de commande des volets de mixage de l'air, centrale de froid, organes de prélèvement d'air chaud sur le circuit de refroidissement du moteur etc...

Dans ce schéma, la liaison 13 transmet ainsi au calculateur 11 les signaux représentant la commande exercée sur les touches d'actionnement 2 à 5, matérialisant la demande d'air chaud ou froid complémentaire en vue de modifier la température ambiante dans l'habitacle.

Sur la liaison 14 transitent les ordres de commande adressés aux moyens 12, assurant la fourniture d'air réchauffé ou refroidi en fonction de la variation exigée par les touches précédentes, en agissant sur les organes de manoeuvre des ventilateurs, pulseurs, volets de mixage etc..., tandis que la liaison 15 transmet les signaux issus de divers capteurs associés aux moyens 12, donnant en permanence la température intérieure de l'habitacle, la température extérieure, la valeur de l'humidité ambiante, la vitesse de l'air en fonction du déplacement du véhicule etc...

Enfin, le calculateur 11 transmet par la liaison 16 les informations nécessaires à la gestion des rampes de visualisation 2a à 5a, en permettant selon le cas l'allumage ou l'extinction des diodes électroluminescentes 6 de ces rampes.

Le fonctionnement du dispositif schématiquement décrit ci-dessus est le suivant.

Lorsque l'usager, à l'intérieur de l'habitacle du véhicule, ressent le besoin d'améliorer son confort thermique, notamment par réchauffement ou rafraîchissement de l'atmosphère de cet habitacle, il lui suffit d'actionner l'une des touches 2 à 5, en fonction précisément de sa demande d'accroissement ou de diminution de la température.

Consécutivement à l'effort exercé sur l'une quelconque de ces touches, les diodes 6 de la rangée 2a à 5a associée à la touche choisie s'allument progressivement, jusqu'à ce que l'usager relâche son appui sur cette dernière.

Le calculateur 11 interprète l'état des diodes allumées comme une modification de la consigne de régulation de l'ensemble de climatisation et notamment comme une demande d'une "quantité" de chauffage ou de refroidissement, ce calculateur pilotant alors les moyens 12. Ceux-ci assurent la fourniture d'air en fonction de cette demande, en particulier en distinguant les zones où la régulation doit intervenir (zone supérieure ou zone inférieure), étant ici précisé que, si l'exemple décrit prévoit d'alimenter séparément le haut et le bas de l'habitacle, toute autre configuration pourrait être envisagée, par exemple avec fournitures d'air distinctes à l'avant et à l'arrière du véhicule, du côté du conducteur ou du côté opposé, ou autres.

Dans un premier mode de réalisation, la régulation est basée uniquement sur la température. Mais elle peut également, selon un autre mode de réalisation, être basée sur une évaluation plus globale du confort thermique de l'usager par la synthèse dans un paramètre unique appelé "bilan thermique" de l'ensemble des paramètres qui interviennent dans le confort thermique (température, humidité, vitesse de l'air, etc...). Cette synthèse peut se faire par exemple selon la norme ISO 7730 relative à l'habitat. Dans ce cas, l'usager exprime toujours une demande de réchauffement ou de rafraîchissement, mais le calculateur tient compte de tous les paramètres intervenant pour aboutir au niveau de confort thermique souhaité.

Avantageusement et dans l'exemple de réalisation représenté, les rampes 2a à 5a de diodes 6 peuvent être utilisées pour fournir une indication à l'usager sur le moment où l'apport de calories ou de frigories a permis d'atteindre le confort souhaité, les diodes, successivement allumées consécutivement à l'appui de la touche d'actionnement 2 à 5, étant ensuite éteintes une à une, au fur et à mesure que le dispositif s'approche de l'état de confort correspondant à la commande effectuée, la gestion des diodes dans chacune des rampes étant également pilotée par le calculateur 11 à travers la liaison 16 et un moyen de comparaison permanente entre le paramètre affiché et le paramètre mesuré.

Les voyants additionnels 7 et 8 peuvent alors être allumés, à moins qu'ils ne l'aient été dès la mise en oeuvre des diverses touches correspondant aux zones que représentent ces voyants additionnels.

A noter que le suivi permanent de la situation par le calculateur 11 selon les données reçues des divers capteurs extérieurs par la liaison 15 permet de restituer à l'usager toute évolution de l'ambiance dans l'habitacle, à partir de laquelle il est en mesure de mettre en oeuvre le dispositif pour retrouver en permanence l'état de confort souhaité.

On a ainsi réalisé un dispositif automatique de conception très simple, qui ne limite pas la régulation à la seule notion de température mais permet de prendre en compte l'ensemble des paramètres qui jouent pour assurer à l'usager un confort optimal. Notamment, il permet de mieux apprécier le caractère subjectif des sensations ressenties par l'usager, la demande formulée par celui-ci étant essentiellement qualitative.

Ce dispositif permet également un contrôle permanent de l'évolution de la situation et en particulier du moment où la demande souhaitée est satisfaite, ceci sans empêcher, en cas de nécessité, sa mise hors service pour revenir à une situation de dégivrage rapide.

Bien entendu, il va de soi que l'invention ne se limite pas à l'exemple de réalisation plus spécialement décrit ci-dessus en référence aux dessins annexés ; elle en embrasse au contraire toutes les variantes mais est seulement limitée par les revendications. En particulier, bien que cet exemple soit essentiellement orienté vers une application à la climatisation de l'habitacle d'un véhicule automobile, il n'exclut pas toute autre utilisation, notamment pour la climatisation d'enceintes fermées ou de locaux quelconques destinés à contenir des personnes.

## Revendications

1. Dispositif pour la régulation automatique de la climatisation de l'air ambiant dans une enceinte fermée, notamment dans l'habitacle d'un véhicule automobile, par action de l'usager sur une commande traduisant une demande variable mais non chiffrée d'accroissement ou de diminution d'au moins un paramètre de climatisation pour atteindre un niveau de consigne à partir de la situation constatée, afin de faire évoluer le confort thermique ressenti jusqu'à satisfaire ledit usager, ce dispositif comportant un ensemble de contrôle du ou des paramètres de climatisation, et un calculateur (11) agissant sur des moyens (12) pour fournir à l'habitacle des calories ou des frigories selon le sens de la variation demandée, cet ensemble étant relié à un panneau de commande (1) comportant des moyens de visualisation (2a à 5a) comprenant une pluralité de témoins lumineux voisins (6) et au moins une touche d'actionnement (2 à 5) dont la manoeuvre provoque, selon le cas, l'augmentation ou la diminution desdits paramètres, dans une mesure qui correspond à l'affichage d'une fraction ou de la totalité desdits témoins, **caractérisé en ce qu'**il comporte de plus un moyen de comparaison permanente entre le paramètre de climatisation affiché par les témoins lumineux (6) allumés du panneau de commande (1) et le paramètre mesuré, propre à éteindre progressivement ces témoins, au fur et à mesure que l'écart relevé entre ces paramètres diminue.

2. Dispositif selon la revendication 1, **caractérisé en ce que** les témoins lumineux (6) du panneau de commande (1) sont constitués par au moins une rangée de diodes électroluminescentes, dont le nombre allumé par la manoeuvre de la touche d'actionnement (2 à 5) indique l'importance et le sens de la variation demandée.

3. Dispositif selon la revendication 2, **caractérisé en ce que** le panneau de commande (1) comporte un témoin additionnel (7, 8), s'allumant lorsque l'écart relevé est nul, l'état de confort souhaité étant atteint.

4. Dispositif selon l'une quelconque des revendications 1 à 3, **caractérisé en ce que** l'ensemble de contrôle du ou des paramètres de climatisation comporte au moins deux sections distinctes, comprenant chacune une touche d'actionnement (2 à 5) et une pluralité de témoins lumineux voisins (6), ces sections étant dévolues à une commande desdits paramètres, respectivement dans le sens d'une augmentation de la température ou d'une diminution de celle-ci.

5. Dispositif selon la revendication 4, **caractérisé en ce que** l'ensemble de contrôle comporte quatre sections distinctes, associées à un circuit de répartition de l'air réchauffé ou réfrigéré dans l'habitacle, respectivement dans une première zone au droit de la partie supérieure du corps de l'usager conducteur et de ses passagers, et dans une deuxième zone, au niveau des jambes de ceux-ci.

6. Dispositif selon la revendication 5, **caractérisé en ce que** le circuit de répartition de l'air dans l'habitacle est prévu pour distribuer celui-ci respectivement vers l'avant ou vers l'arrière de l'habitacle, le cas échéant du côté du conducteur et du côté opposé.

7. Dispositif selon l'une quelconque des revendications 1 à 6, **caractérisé en ce qu'**il comporte une commande prioritaire (9) pour délivrer une fraction variable de l'air dans l'habitacle par des ouïes proches du pare-brise, pour assurer le dégivrage ou désembuage de celui-ci.

8. Dispositif selon l'une quelconque des revendications 1 à 7, **caractérisé en ce que** les moyens (12) pour fournir à l'habitacle des calories ou des frigories selon le sens de la variation demandée, sont sous le contrôle du calculateur (11) qui assure simultanément la gestion des témoins lumineux (6).

## Patentansprüche

1. Vorrichtung zur automatischen Raumklimaregelung in einem geschlossenen Raum, besonders dem Fahrgastraum eines Kraftfahrzeugs, wobei der Benutzer auf eine Steuerung einwirkt, die einen variablen jedoch nicht bezifferten Befehl der Erhöhung oder Verringerung mindestens eines Klimatisierungsparameters liefert, um ausgehend vom festgestellten Zustand ein Sollniveau zu erreichen, um den gefühlten Wärmekomfort bis zur Zufriedenheit des Benutzers zu entwickeln, wobei diese Vorrichtung eine Einheit zur Kontrolle des oder der Klimatisierungsparameter und einen Rechner (11) aufweist, die auf eine Vorrichtung (12) einwirken, um dem Fahrgastraum Wärme oder Kälte im Sinne der gewünschten Veränderung zuzuführen, wobei diese Einheit mit einer Steuertafel (1) verbunden ist, welche Schauzeichen (2a bis 5a) mit einer Mehrzahl von benachbarten Anzeigeleuchten (6) und mindestens einer Betätigungstaste (2 bis 5) aufweist, deren Betätigung je nach dem Fall die Erhöhung oder Verringerung der Parameter in einem Maß bewirkt, das der Anzeige eines Bruchteils oder der Gesamtheit der Schauzeichen entspricht, **dadurch gekennzeichnet, daß** die Vorrichtung außerdem eine Einrichtung zum dauernden Vergleich zwischen dem durch die erleuchteten Anzeigeleuchten (6) der Befehlstafel (1) angezeigten Klimatisierungsparameter und dem gemessenen Parameter aufweist, die geeignet ist, diese Leuchtzeichen in dem Maß, wie sich der festgestellte Abstand zwischen diesen Parametern verringert, zunehmend zu löschen.

2. Vorrichtung nach Anspruch 1, **dadurch gekennzeichnet, daß** die Anzeigeleuchten (6) der Steuertafel (1) aus mindestens einer Reihe von Leuchtdioden bestehen, deren durch die Betätigung der Betätigungstaste (2 bis 5) erleuchtete Anzahl den Grad und die Richtung der gewünschten Veränderung anzeigt.

3. Vorrichtung nach Anspruch 2, **dadurch gekennzeichnet, daß** die Steuertafel (1) eine zusätzliche Anzeigeleuchte (7, 8) aufweist, die aufleuchtet, wenn der festgestellte Abstand Null ist, nämlich der gewünschte Komfortzustand erreicht ist.

4. Vorrichtung nach einem der Ansprüche 1 bis 3, **dadurch gekennzeichnet, daß** die Kontrolleinheit für den oder die Klimatisierungsparameter mindestens zwei gesonderte Abteilungen aufweist, die jede eine Betätigungstaste (2 bis 5) und eine Mehrzahl von benachbarten Anzeigeleuchten (6) aufweisen, wobei diesen Abteilungen eine Steuerung dieser Parameter jeweils im Sinn einer Erhöhung oder einer Verringerung der Temperatur zufällt.

5. Vorrichtung nach Anspruch 4, **dadurch gekennzeichnet, daß** die Kontrolleinheit vier gesonderte Abteilungen aufweist, die mit einem Kreis zur Verteilung der erwärmten oder gekühlten Luft im Fahrgastraum zusammenwirken, und zwar jeweils in einem ersten Bereich gerade vor dem oberen Teil des Körpers des benutzenden Fahrers und seiner Fahrgäste und in einem zweiten Bereich auf der Höhe von deren Beinen.

6. Vorrichtung nach Anspruch 5, **dadurch gekennzeichnet, daß** der Kreis zur Verteilung der Luft im Fahrgastraum des Fahrzeugs dafür eingerichtet ist, diese jeweils zur Vorderseite oder Rückseite des Fahrgastraums gegebenenfalls auf der Seite des Fahrers und der entgegengesetzten Seite zu verteilen.

7. Vorrichtung nach einem der Ansprüche 1 bis 6, **dadurch gekennzeichnet, daß** sie eine Vorrangssteuerung (9) aufweist, um einen veränderbaren Teil der Luft im Fahrgastraum durch Luftaustrittsdüsen nahe bei der Windschutzscheibe abzugeben, um deren Enteisung oder Beschlagabtrocknung zu gewährleisten.

8. Vorrichtung nach einem der Ansprüche 1 bis 7, **dadurch gekennzeichnet, daß** die Vorrichtung (12), die dem Fahrgastraum die Wärme- oder Kälteeinheiten im Sinn der geforderten Veränderung liefert, der Kontrolle durch den Rechner (11) unterliegt, der gleichzeitig den Betrieb der Anzeigeleuchten (6) steuert.

## Claims

1. Device for the automatic adjustment of the air conditioning of the ambient air in an enclosed space, in particular in the passenger cell of a motor vehicle, by the action of the user on a control translating a variable but not coded request for increasing or reducing at least one parameter of air conditioning to achieve a set-point level based on the confirmed situation, to develop the thermal comfort felt to satisfy said user, this device comprising a command assembly of the parameter(s) of air conditioning, and a computer (11) acting on the means (12) for supplying the passenger cell with calories or kilogram calories in accordance with the direction of the variation requested, this assembly being connected to a control panel (1) comprising display means (2a to 5a) comprising a plurality of adjacent indicator lamps (6) and at least one actuating button (2 to 5), the working of which causes, as appropriate, the increase or reduction of said parameters, to an extent corresponding to the displaying of a portion or the whole of said indicators, **characterised in that** it also comprises a means for continuous comparison between the parameter of air conditioning displayed by the lit-up indicator lamps (6) on the control panel (1) and the measured parameter, appropriate to progressively switch off these indicators as the difference detected between these parameters reduces.

2. Device according to claim 1, **characterised in that** indicator lamps (6) on the control panel (1) consist of at least one row of electroluminescent diodes, the number of which lit-up by operation of the actuating button (2 to 5) indicates the size and the direction of variation requested.

3. Device according to claim 2, **characterised in that** the control panel (1) comprises an additional indicator (7, 8) which lights up when the detected difference is zero, the desired state of comfort being achieved.

4. Device according to any one of claims 1 to 3, **characterised in that** the command assembly of the parameter(s) of air conditioning comprises at least two distinct sections, each comprising an actuating button (2 to 5) and a plurality of adjacent lamp indicators (6), these sections being passed to a control of said parameters, respectively in the direction of an increase of the temperature or a reduction thereof.

5. Device according to claim 4, **characterised in that** the command assembly comprises four distinct sections associated with a circuit for distributing the reheated or cooled down air in the passenger cell, respectively in a first zone to the right of the upper part of the body of the driver user and his passengers, and in a second zone, in the region of their legs.

6. Device according to claim 5, **characterised in that** the distribution circuit for the air in the passenger cell is provided to distribute the air respectively towards the front or towards the rear of the passenger cell, if necessary from the driver's side or the opposite side.

7. Device according to any one of claims 1 to 6, **characterised in that** it comprises a priority control (9) for supplying a variable proportion of the air in the passenger cell via inlets near to the windscreen, to ensure de-icing or de-misting thereof.

8. Device according to any one of claims 1 to 7, **characterised in that** the means (12) for supplying the passenger cell with calories or kilogram calories in accordance with the direction of variation requested are under the command of the computer (11) which simultaneously ensures control of the indicator lamps (6).
